**Europäisches Patentamt**

**European Patent Office**

**Office européen des brevets**

(19)

(11) Veröffentlichungsnummer: **0 222 389 B1**

# EUROPÄISCHE PATENTSCHRIFT

(12)

(45) Veröffentlichungstag der Patentschrift: **10.04.91**

(51) Int. Cl.⁵: **C04B 35/56**, C04B 35/65

(21) Anmeldenummer: **86115711.3**

(22) Anmeldetag: **12.11.86**

Die Akte enthält technische Angaben, die nach dem Eingang der Anmeldung eingereicht wurden und die nicht in dieser Patentschrift enthalten sind.

(54) **Verfahren zur Herstellung Siliziumkarbidkörpern.**

(30) Priorität: 13.11.85 DE 3540254

(43) Veröffentlichungstag der Anmeldung:
20.05.87 Patentblatt 87/21

(45) Bekanntmachung des Hinweises auf die
Patenterteilung:
10.04.91 Patentblatt 91/15

(84) Benannte Vertragsstaaten:
**CH DE FR GB IT LI SE**

(56) Entgegenhaltungen:
**EP-A- 0 045 134**
**EP-A- 0 159 186**
**DE-A- 3 116 786**
**DE-A- 3 305 529**
**US-A- 3 947 550**

(73) Patentinhaber: **MTU MOTOREN- UND TURBINEN-UNION MÜNCHEN GMBH
Dachauer Strasse 665 Postfach 50 06 40
W-8000 München 50(DE)**

(72) Erfinder: **Andrees, Gerhard
Paosostrasse 59
W-8000 München 60(DE)**
Erfinder: **Hüther, Werner, Dr.-Ing.
Nikolaus-Lenau-Strasse 8
W-8047 Karlsfeld(DE)**
Erfinder: **Vogel, Wilhelm
Hauptstrasse 74
W-8901 Aystetten(DE)**
Erfinder: **Kranzeder, Josef
Landgerichtsstrasse 10 1/2
W-8058 Erding(DE)**

## Beschreibung

Die Erfindung betrifft ein Verfahren zur Herstellung von Siliziumkarbidkörpern durch Spritzen oder Pressen, Austreiben des Bindemittels und Reaktionssintern.

Es ist bekannt, bei der Durchführung solcher Verfahren sehr feines Siliziumkarbidpulver mit einem geringen Anteil von Kohlenstoff und gegebenenfalls geringen metallischen Zusätzen wie Bor oder Aluminium zu versetzen. Der Kohlenstoff wird meist in Form eines Harzes zugegeben und für die Verbesserung der Spritzfähigkeit der Masse wird dann ein Thermoplast als Binder zugegeben. Dieser Binder muß nach der Formgebung wieder vollständig entfernt werden. Selbst bei kleinen dünnwandigen Bauteilen sind hierfür mehrere Tage erforderlich. Mit zunehmender Wanddicke steigt die Ausbrennzeit für den Binder stark an. Bei relativ großen Teilen, wie den Rädern von Turbomaschinen, treten Risse, Blasen und oft ein starker Verzug auf.

Es ist auch bekannt, ein Gemisch aus Siliziumkarbid und Graphitpulver als Ausgangsmaterialien zu verwenden. Dieses Pulver wird dann mit einem Thermoplast versetzt, um es spritzfähig zu machen. Beim Austreiben des Binders treten die gleichen Schwierigkeiten auf, wie oben erwähnt. Nach dem Austreiben wird der Grünling mit Silizium infiltriert. Dabei reagiert das Silizium mit dem Graphit zu SiC und bindet das bereits vorhandene SiC mit ab. Überschüssiges Si sitzt in den Poren, so daß der fertige SiC-Körper ca. 5 % bis 15 % metallisches Si enthält. Neben den oben bereits erwähnten Nachteilen muß man bei diesem Verfahren noch einen starken Festigkeitsabfall bei hohen Temperaturen ab etwa 150°, infolge Erweichens des Si, in Kauf nehmen.

Aufgabe der Erfindung ist es, ein Verfahren nach der eingangs genannten Art (Oberbegriff des Patentanspruchs 1) anzugeben, mit dem ein Siliziumkarbidkörper herstellbar ist, der möglichst wenig freies Silizium, gegebenenfalls auch wenig freien Kohlenstoff enthält.

Die gestellte Aufgabe ist durch die Schrittfolge und Merkmale des kennzeichnenden Teils des Patentanspruchs 1 erfindungsgemäß gelöst.

Dabei ist es u.a. wesentlich, daß die zum späteren Pressen oder Spritzen verwendete Mischung aus feinem Silizium- und Siliziumkarbidpulver (Siliziumanteil von 5 bis 25 Gew.-% an der gesamten Spritz- und Preßmasse) mit dem Sinterhilfsmittel (Bor, Aluminium) und mit dem Bindemittel (Duromerkunststoff) versetzt werden soll; nach dem Aushärtenlassen kann so ein Körper verzugfrei und mit vergleichsweise hoher Grünfestigkeit hergestellt werden.

In Verwendung eines Duromerkunststoffes (Duroplast) als Bindemittel, das sich zur Erhaltung der guten Fließfähigkeit der Spritz- oder Preßmasse bewährt hat - hier insbesondere ein Epoxid-Harz, Phenol-Harz, Polyester-Harz oder dergleichen-, ist das beabsichtigte Austreiben/Verkoken des Bindemittels gestaltbar; als Form- bzw. Grünkörper können auch dickwandige Teile in kurzer Zeit verzug- und rißfrei verkokt werden.

Nach dem Sinterschritt liegt ein dichter, hochfester Körper mit mehr als 95 % der theoretischen Dichte und ausreichender Temperaturfestigkeit bis etwa 1400 °C (Prozentangabe auf reines SiC bezogen zu verstehen) vor.

Es kann der Anteil am freien Si oder freiem Kohlenstoff, welcher als Rest verbleibt, eingestellt werden. Somit sind bestimmte Werkstoffparameter, z. B. Wärmedehnung, Leitfähigkeit oder dergleichen, gezielt beeinflußbar.

In einem aus der EP-A 159 186 bekannten Fall zur Herstellung eines Siliziumkarbidkörpers soll insbesondere gemäß dortigem Beispiel 1 (Seite 8) im wesentlichen wie folgt verfahren werden. Lösen von Kohle-Teer-Pech in Chinolin; Beigabe und Zumischung von Benzol; weitere Beigaben von Siliziumkarbid - in verhältnismäßig großem Gewichtsanteil (110g) - sowie von Bor-Karbid-Pulver (0,15g) und von Siliziumpulver (0,5g); 3-stündiges Mischen der angegebenen Mixtur; Trocknen der resultierenden Mixtur ( = Pulverisierung) und anschließende Durchsiebung; hierauf Kalt-Pressen der Pulvermixtur; daran sich anschließende Einbringung der gepressten Mixtur in eine Gummiform; hierauf Pressung (hydrostatisch) zu einem Grünkörper; dann Brennen des letzteren mit anschließender Sinterung. Im bekannten Fall stellen Bor bzw. eine Borkomponente, Silizium sowie Teer-Pech Beigaben im Sinne von Sinterhilfen dar. In entsprechend bemessener Zugabe zum Siliziumkarbid soll genannter Teer-Pech mithin Kornwachstum (Verzögerung), Oberflächenoxidationen sowie Dichte des betreffenden Körpers günstig zu beeinflussen helfen. Keinesfalls kann diesem "Teer-Pech" die Funktion eines "Duromerkunststoffes" als Bindemittel im Sinne der Erfindung zugeschrieben werden.

Ein aus der US-A 3,947,550 bekannter Fall behandelt die Herstellung eines nicht vollständig dichten Siliziumkarbid-Gegenstands; dabei soll eine Mischung aus Siliziumkarbidund Siliziumpartikeln nebst eines Duroplasten (Bindemittel) zum Gegenstand (Grünkörper) geformt werden; durch anschließende thermische Zersetzung soll der Duroplast in Kohlenstoff umgewandelt und letzterer schließlich mit dem in der Mischung des Grünkörpers enthaltenen Silizium zur Reaktion als SiC gebracht werden. Die im bekannten Fall herzustellenden Körper bleiben in jedem Fall aber porös, allenfalls oberflächenseitig dichte Körper wären gegebenenfalls herstellbar. Sinterhilfen im Sinne der Erfindung, wie Bor und Aluminium, sind dem bekannten Fall nicht entnehmbar.

Weitere vorteilhafte Ausgestaltungen der Erfindung gemäß Patentanspruch 1 gehen aus den Patentansprüchen 2 bis 11 hervor.

Ausführungsbeispiel:

Für eine Spritzmasse wird ein Gemisch aus sehr feinem SiC im Bereich (Korngröße) von etwa 1μm und darunter und Si-Pulver im Bereich (Korngröße) von etwa 10μm und darunter hergestellt. Der Siliziumanteil beträgt dabei zwischen 5 und 25 Gew. % an der gesamten Spritzmasse. Zusätzlich wird dieses Gemisch mit Bor oder Al als Sinterhilfsmittel in den üblichen Konzentrationen, zwischen 0,4 und 1 Gew.-% an der gesamten Spritzmasse, versetzt.

In weiterer Verarbeitung wird nun in dieses Gemisch, in ca. 15 bis 40 Gew.-% (Bezogen auf die Gesamtmasse), ein Duromerkunststoff als Bindemittel eingerührt, z.B. ein Epoxid-, Phenolharz, und so ein spritzfähiges Granulat hergestellt.

Hierauf wird nun das spritzfähige Granulat über eine geeignete Spritzeinrichtung in einer Spritzform zu einem Formkörper (Grünling) verarbeitet; der Formkörper wird so lange in der Spritzform belassen, bis er ausgehärtet ist.

Da diese Spritzmasse noch im "Formnest" ausgehärtet wird, entsteht ein verzugsfreies Teil mit sehr hoher Grünfestigkeit. Zur Erhöhung der Plastizität kann der Spritzmasse ein geringer Anteil (0,1 bis 5 Gew.-% bezogen auf die Gesamtmasse) eines Fließ- oder Gleitmittels, z.B. ein Wachs oder Stearat, zugesetzt werden.

Anschließend wird der ausgehärtete Formkörper bei Temperaturen bis etwa 600° in Schutzgasatmosphäre oder im Vakuum derart erhitzt, daß das Harz (Bindemittel) soweit ausgetrieben wird, daß vom Harzanteil ca. 20 bis 50% als freier Kohlenstoffanteil zurückbleiben. Dabei tritt keine plastische Phase mehr auf. Da sich die Harze beim Verkoken zusammenziehen, tritt bereits hierbei eine Schrumpfung des Formkörpers von einigen Prozent auf; so können auch dickwandige Teile in kurzer Zeit verzug- und rißfrei verkokt werden.

Nun erfolgt eine Reaktionssinterung des so vorbehandelten Formkörpers derart, daß der verbliebene freie Kohlenstoffanteil mit dem freien Silizium zu SiC reagiert und ein Körper mit mehr als 95% der theoretischen Dichte erzielt wird.

Das Verhältnis Kohlenstoff (bzw. Harz) zu Silizium kann so abgestimmt werden, daß nur ca. 0,5 % Restkohlenstoff bei einer Sintertemperatur von etwa 2000°C verbleiben.

Dieser Reaktionssinterschritt kann für eine Zeitdauer von etwa 5 Minuten bis zu einer Stunde durchgeführt werden, mit anschließendem gleichmäßigem Abkühlen auf Raumtemperatur.

Nach zuvor genannter Sinterung wird der Formkörprer heißisostatisch gepreßt bei Temperaturen bis 2500°C und Drücken bis 2000 bar.

An das Reaktionssintern kann eine Nachbearbeitung auf die Endmaße des Bauteils angeschlossen werden, insbesondere eine Feinbearbeitung, z.B. in der Art eines oberflächenseitigen, bereichsweisen Abtragung von Material mittels Laserstrahlbearbeitung.

Die Erfindung ist anwandbar für Bauteile des Maschinen- und Apparatebaus, insbesondere für Bauteile hoher thermischer Beanspruchung und ausreichender Festigkeit, wie Schaufeln von Strömungsmaschinen, Heißgasturbinen, Turbolader etc.

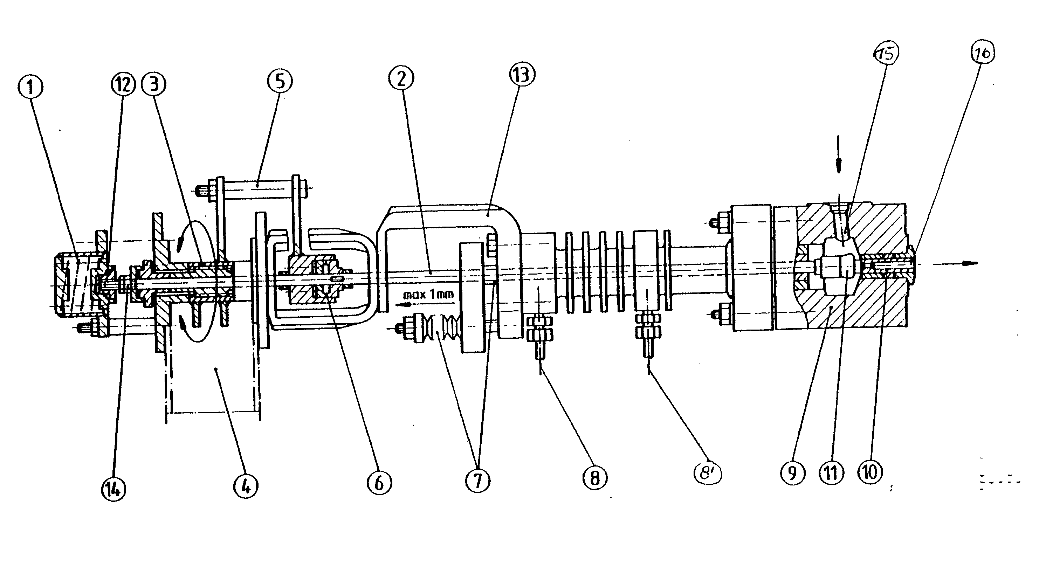

**Ansprüche**

1. Verfahren zur Herstellung eines hochfesten, extrem temperaturbeständigen Siliciumcarbidkörpers duch Spritzen oder Pressen, gekennzeichnet durch folgende Schritte:
   - Herstellung einer Spritz- oder Pressmasse durch Mischen von feinem Siliciumcarbidpulver mit feinem Siliciumpulver, mit einem Siliciumanteil zwischen 5 bis 25 Gew.-% an der gesamten Spritz- und Pressmasse;
   - Zumischung eines Sinterhilfsmittels wie Bor oder Aluminium und eines Duromerkunststoffs als Bindemittel;
   - Verspritzen oder Verpressen der Masse in einer Spritz- oder Preßform zu einem Formkörper (Grünling);
   - Belassung des Formkörpers in der Spritz- oder Pressform bis er ausgehärtet ist;
   - Erhitzen des ausgehärteten Formkörpers derart, daß das Bindemittel wenigstens teilweise ausgetrieben wird und aus letzterem ein Kohlenstoffanteil zurückbleibt;
   - druckloses Sintern oder Reaktionssintern des so vorbehandelten Formkörpers, derart, daß der Kohlenstoffanteil mit freiem Silizium zu Siliziumkarbid reagiert und ein Körper mit mehr als 95% der theoretischen Dichte erreicht wird;
   - heißisostatisches Pressen des gesinterten Formkörpers bei Temperaturen bis 2500°C und Drücken bis 2000bar.

2. Verfahren nach Anspruch 1, dadurch gekennzeichnet, daß das Austreiben des Bindemittels bei Temperaturen bis etwa 600°C im Schutzgas oder im Vakuum erfolgt.

3. Verfahren nach Anspruch 2, dadurch gekennzeichnet, daß das Reaktionssintern des Formkörpers unter Atmosphärendruck bei Temperaturen von 2000°C oder darüber erfolgt.

4. Verfahren nach Anspruch 3, dadurch gekennzeichnet, daß das Reaktionssintern des Formkörpers für eine Zeitdauer von einigen Minuten bis zu einer Stunde und mehr durchgeführt wird mit daran anschließender gleichmäßiger Abkühlung auf Raumtemperatur.

5. Verfahren nach Anspruch 3 oder Anspruch 4, dadurch gekennzeichnet, daß der Körper nach dem Reaktionssintern einer oberflächenseitigen Feinbearbeitung durch Materialabtragung mittels Laserstrahlung unterworfen wird.

6. Verfahren nach Anspruch 1, dadurch gekennzeichnet, daß für den Duromerkunststoff als Bindemittel ein Epoxidharz, ein Phenolharz oder ein Polyesterharz in einem Anteil von 15 bis 40Gew.-%, bezogen auf die Gesamtmasse, verwendet wird.

7. Verfahren nach Anspruch 1, dadurch gekennzeichnet, daß der Spritz- oder Preßmasse ein Fließ- oder Gleitmittel, wie Wachs, Stearat, in einem Anteil von 0,1 bis 5 Gew.-%, bezogen auf die Gesamtmasse, zugesetzt wird.

8. Verfahren nach Anspruch 1, dadurch gekennzeichnet, daß das Sinterhilfsmittel an der gesamten Spritz- oder Preßmasse in einem Anteil zwischen 0,4 und 1 Gew.-% verwendet wird.

9. Verfahren nach Anspruch 1, dadurch gekennzeichnet, daß für die Spritz- oder Preßmasse SiC-Pulver in einer Korngröße von 0,5 bis 2,5µm verwendet wird.

10. Verfahren nach Anspruch 1, dadurch gekennzeichnet, daß für die Spritz- oder Preßmasse Si-Pulver in einer Korngröße von 5 bis 25µm verwendet wird.

11. Verfahren nach Anspruch 1, dadurch gekennzeichnet, daß die Spritz- oder Preßmasse gemischt als Granulat verwendet wird.

## Claims

1. Process for the production of a high strength, extremely temperature-resistant silicon carbide body by injection or pressing, characterised by the following steps:
   - production of an injected or pressed material by mixing fine silicon carbide powder with fine silicon powder, having a silicon content of between 5 to 25% by weight of the entire injected and pressed material;
   - admixing a sintering agent, such as boron or aluminium, and a duromer plastics as a bonding agent;
   - injecting or extruding the material in an injection or press mould to form a moulded body (green compact);
   - leaving the moulded body in the injection or press mould until it is hardened;
   - heating the hardened moulded body so that the bonding agent is at least partially expelled and from it a carbon fraction remains;
   - pressureless sintering or reaction sintering of the moulded body thus treated so that the carbon content reacts with free silicon to form silicon carbide and a body with more than 95% of the theoretical density is obtained;
   - hot isostatic pressing of the sintered moulded body at temperatures up to 2500°C and pressures up to 2000 bar.

2. Process according to claim 1, characterised in that expulsion of the bonding agent takes place at temperatures up to approximately 600°C in a protective gas or in a vacuum.

3. Process according to claim 2, characterised in that the reaction sintering of the moulded body takes place at atmospheric pressure at a temperature of 2000°C or over.

4. Process according to claim 3, characterised in that the reaction sintering of the moulded body is carried out for a period of a few minutes up to an hour and more, with subsequent uniform cooling to room temperature.

5. Process according to claim 3 or claim 4, characterised in that after reaction sintering the body is subjected to a fine surface treatment by material removal by means of laser radiation.

6. Process according to claim 1, characterised in that as a bonding agent for the duromer plastics there is used an epoxide resin, a phenol resin or a polyester resin in an amount of 15 to 40% by weight based on the entire mass.

7. Process according to claim 1, characterised in that a flow medium or lubricant, such as wax or stearate, is added to the injected or pressed material in an amount of 0.1 to 5% by weight based on the entire mass.

8. Process according to claim 1, characterised in that the sintering agent is used in the entire injected or pressed material in an amount of between 0.4 and 1% by weight.

9. Process according to claim 1, characterised in that SiC powder with a grain size of 0.5 to 2.5 μm is used for the injected or pressed material.

10. Process according to claim 1, characterised in that Si powder with a grain size of 5 to 25 μm is used for the injected or pressed material.

11. Process according to claim 1, characterised in that the injected or pressed material is used mixed as a granulate.

**Revendications**

1. Procédé permettant la fabrication d'un objet en carbure de silicium de haute dureté, extrêmement stable à la température, par injection ou par moulage, et caractérisé par les étapes suivantes :
   - fabrication d'une matière à injecter ou d'une matière à mouler par mélange de poudre fine de carbure de silicium et de poudre fine de silicium, présentant une teneur en silicium comprise entre 5 et 25% en poids par rapport à l'ensemble de la matière à injecter et à mouler,
   - mélanger d'un agent favorisant le frittage comme le bore ou l'aluminium avec une résine de synthèse thermo-durcissable servant d'agent liant,
   - injection ou moulage de la matière dans un moule à injection ou un moule de presse de façon à obtenir un corps moulé,
   - séjour du corps moulé dans le moule à injection ou le moule de presse jusqu'à son durcissement,
   - chauffage du corps moulé et durci de telle façon que l'agent liant soit au minimum partiellement expulsé et qu'une partie du carbure de l'agent liant reste dans le corps moulé,
   - frittage sans pression ou bien frittage du corps moulé ainsi conditionné, de telle façon que le carbone réagisse avec le silicium libre pour former du carbure de silicium et former ainsi un objet présentant une densité supérieure à 95% de la densité théorique,
   - pressage dans une presse isostatique à température élevée du corps moulé fritté à des températures montant jusqu'à 2500°C et des pressions allant jusqu'à 2000 Bars (2 000 x 10⁵ Pa).

2. Procédé conforme à la revendication 1, caractérisé en ce que l'expulsion de l'agent liant se passe à des températures allant jusqu'à 600°C, sous atmosphère de gaz de protection, ou dans le vide.

3. Procédé conforme à la revendication 2, caractérisé en ce que la réaction de frittage sous pression atmosphérique du corps moulé se fait à des températures de 2000°C ou plus.

4. Procédé conforme à la revendication 3, caractérisé en ce que la réaction de frittage du corps moulé se déroule pendant une durée allant de quelques minutes à une heure et plus, avec aussitôt après, refroidissement constant jusqu'à température ambiant.

5. Procédé conforme à la revendication 3 ou à la revendication 4, caractérisé en ce que l'objet après frittage est soumis à une finition de surface consistant en un enlèvement de matière par rayon laser.

6. Procédé conforme à la revendication 1, caractérisé en ce que, comme résine de synthèse servant d'agent liant on utilise une résine époxy, une résine phénolique ou une résine polyester dans une proportion de 15 à 40% exprimée en poids par rapport à la masse totale.

7. Procédé conforme à la revendication 1, caractérisé en ce que la matière à injecter ou à mouler est additionnée d'un agent fluidifiant ou lubrifiant comme la cire, le stéarate, dans une proportion de 0,1 à 5% exprimée en poids à la masse totale.

8. Procédé conforme à la revendication 1, caractérisé en ce que l'agent favorisant le frittage est utilisé dans une proportion comprise entre 0,4 et 1% de la masse de matière à injecter ou à mouler.

9. Procédé conforme à la revendication 1, caractérisé en ce que pour la matière à injecter ou à mouler on utilise une poudre de SiC présentant une granulométrie de 0,5 à 2,5 micron.

10. Procédé conforme à la revendication 1, caractérisé en ce que pour la matière à injecter ou à mouler on utilise une poudre de Si présentant une granulométrie de 5 à 25 micron.

11. Procédé conforme à la revendication 1, caractérisé en ce que l'on utilise pour la matière à injecter ou à comprimer un granulat mélangé.

max 1 mm